# EUROPÄISCHE PATENTSCHRIFT

(11) **EP 0 304 026 B1**
(45) Veröffentlichungstag und Bekanntmachung des Hinweises auf die Patenterteilung: **12.01.1994**
(21) Anmeldenummer: 88113333.4
(22) Anmeldetag: 17.08.1988
(51) Int. Cl.: C09J 5/06

(54) **Schmelzklebstoff und Verfahren zu seiner Verarbeitung**
Hot melt adhesive and method of using it
Adhésif thermofusible et son procédé de mise en oeuvre

(30) Priorität: 20.08.1987 DE 3727847
(43) Veröffentlichungstag der Anmeldung: 22.02.1989
(73) Patentinhaber: H.B. FULLER LICENSING & FINANCING, INC., Wilmington, Delaware 19801 (US)
(72) Erfinder: Schweigert, Ludwig Wilhelm, D-8000 München 83 (DE); Reischle, Ferdinand Franz, D-8000 München 71 (DE); Edelberg, Rainer Günther, D-8012 Ottobrunn (DE)
(74) Vertreter: Maiwald, Walter, Dr. Dipl.-Chem.

(56) Entgegenhaltungen:
- EP-A- 0 107 097
- AT-A- 316 712
- US-A- 4 336 298
- US-A- 4 544 432

## Beschreibung

Die vorliegende Erfindung betrifft einen Schmelzklebstoff, dessen Zusammenzusetzung, ein Verfahren zu seiner Herstellung und dessen besondere Verarbeitung. Im einzelnen bezieht sich die Erfindung auf einen Schmelzklebstoff aus thermoplastischen Polymeren oder Prepolymeren oder Kunstharzen oder einem Gemisch aus diesen Stoffen oder anderen Bestandteilen, von denen zumindest ein Bestandteil reaktive Gruppen aufweist, wie z. B. Isocyanatgruppen, Epoxidgruppen, nucleophile Gruppen, Hydroxylgruppen, Aminogruppen, Amidgruppen, Carboxylgruppen, Thiolgruppen, Doppelbindungen, Dreifachbindungen, Peroxidgruppen oder Azogruppen sowie gegebenenfalls mit Modifizierungsmitteln wie Kunstharz, Füllstoff, Farbstoff und Weichmacher.

Schmelzklebstoffe sind allgemein thermoplastische Stoffe, die beim Erwärmen erweichen und in einem erhöhten Temperaturbereich, dem Erweichungsbereich, flüssig werden. Beim Abkühlen auf Raumtemperatur erstarren sie wieder. Dieser Vorgang ist reversibel, das heißt, daß diese Schmelzklebstoffe beim Erwärmen wieder erweichen, was dann ein Nachteil ist, wenn die Klebstelle unter Wärmeeinwirkung nicht wieder lösbar sein soll, was bei den meisten Verklebungen die normale Forderung ist. Einige Schmelzklebstoffe ermöglichen deshalb nur ein Verkleben für Klebstellen, die in einem begrenzten Temperaturbereich belastbar sind.

Es gibt demgegenüber verbesserte Schmelzklebstoffe, wie beispielsweise aus der DE-A-32 36 313 bekannte. Diese Schmelzklebstoffe basieren auf feuchtigkeitsvernetzenden Polyurethanen. Das bedeutet, daß zusätzlich zu der physikalischen Eigenschaft, bei Wärme zu erweichen und beim Erkalten wieder zu erhärten, eine chemische Reaktion abläuft und auch ein chemisches Vernetzen stattfindet. In diesem Schmelzklebstoff ist nur eine reaktive Komponente enthalten. Die chemische Reaktion erfolgt dadurch, daß der Klebstoff aus der Umgebung Feuchtigkeit aufnimmt und vernetzt. Dadurch verliert er nach einer gewissen Aushärtzeit seine thermoplastischen Eigenschaften. Dieser Schmelzklebstoff ist gegenüber den eingangs genannten insofern besser, als die Klebstellen nicht mehr so temperaturabhängig sind wie bei den ursprünglichen Schmelzklebstoffen. Bereits mit diesem Schmelzklebstoff kann man begrenzt die Verarbeitungsvorteile von Schmelzklebstoffen mit den Qualitatsvorteilen von Reaktionsklebstoffen vereinigen.

Allerdings ist zur Vernetzung dieser reaktiven Schmelzklebstoffe unbedingt Feuchtigkeit erforderlich. Die praktische Anwendung ist deshalb auf solche Falle beschränkt, in denen Feuchtigkeit nach der Applikation des Klebstoffes und dem Fügen der Teile noch auf den Klebstoff einwirken kann. Bei der Verklebung wasserdampfdichter Werkstoffe ist dies nicht, oder nicht in ausreichend sicherem Maß der Fall, so daß derartige Schmelzklebstoffe hier nicht angewandt werden können. Auf der anderen Seite ist vor der Auftragung des Klebstoffes Feuchtigkeit in jedem Falle störend. Dies gilt sowohl für den Herstellungsprozeß als auch für die Lagerung und das Aufschmelzen im Verarbeitungsgerät. Aufgrund der Feuchtigkeit in der umgebenden Atmosphäre ist daher die Lagerfähigkeit begrenzt. Nachteilig wirkt sich auch aus, daß die Vernetzungsgeschwindigkeit nicht gesteuert werden kann, da sie abhängig vom Feuchtigkeitsangebot, der Umgebungstemperatur und der Auftragsdicke des Schmelzklebstoffes ist.

Eine bessere Lager- und Transportfähigkeit ist für gattungsfremde Mehrkomponentenklebstoffe, deren Komponenten bis zur gemeinsamen Verarbeitung getrennt gehandhabt werden, beschrieben worden. So ist aus der AT-A-0 316 712 ein Verfahren zum Auftragen von härtbarem Leim auf Holzflächen, bei welchem flüssiges Formaldehydharz und flüssiger Härter getrennt voneinander aufgebracht werden, bekannt. Es handelt sich hierbei um einen Holzleim, der nur in Verbindung mit Lösungsmitteln fließfähig und damit verarbeitbar gemacht werden kann, und nicht um einen Schmelzklebstoff, wie er in der vorliegenden Erfindung offenbart wird.

In der US-A-4,544,432 wird ein Epoxid-Novolackharz, welchem ein reaktiver aliphatischer Epoxyverdünner zur Reduzierung der Viskosität beigegeben wird, beschrieben. Durch Zugabe eines Katalysators entsteht ein klebefähiges Gemisch, welches unmittelbar vor Gebrauch zusammengemischt und bei Raumtemperatur verarbeitet wird. Zur Aushärtung und Bindung des Klebstoffes muß dieser für ca. 3 Minuten auf 150°C erhitzt werden. Es handelt sich hierbei also nicht um einen Schmelzklebstoff, sondern um einen (Wärme-)härtenden Zweikomponentenkleber.

Auch aus der US-A-4,336,298 ist ein (Wärme-)härtender Zweikomponentenkleber bekannt, der nach der Mischung seiner Komponenten innerhalb von 7 bis 15 Minuten bei Temperaturen zwischen 20°C und 35°C aushärtet. Die Aushärtung kann durch Zugabe eines zinnhaltigen Katalysators und Erhitzen der Klebstoffmischung auf 100°C bis 175°C beschleunigt werden. Auch dieses Dokument offenbart keinen Lösungsweg für die Aufgabenstellung der vorliegenden Erfindung.

In der US-A-4,082,708 wird ein Zweikomponenten-Schmelzklebstoff beschrieben, der aus einer flüssigen Epoxid-Komponente und einem festen Bisaminopiperazin-Bestandteil besteht. Ein derartiges flüssig/fest-System weist spezifische Nachteile auf. So sind die Komponenten des flüssig/fest-Systems aufgrund ihrer unterschiedlichen Viskositäten außerordentlich schlecht mischbar, woraus eine Abnahme der maximal erzielbaren mechanischen Eigenschaften sowie eine unvollständige Umsetzung der reaktiven Gruppen in der Klebefuge resultiert. Darüber hinaus benötigt man wegen der schlechten Mischbarkeit der flüssigen und der festen Komponente bestimmte Mischwerkzeuge, um die Homogenität der Mischung aufrechtzuerhalten. Aufgrund des Weichmachereffekts der flüssigen Komponente muß die feste Komponente gegenüber einem fest/fest-System ein erheblich höheres Molekulargewicht aufweisen, woraus sich eine schlechtere Verträglichkeit mit den polymeren oder niedermolekularen Mischungspartnern sowie eine durch die hohe Viskosität bedingte schlechtere Verarbeitbarkeit ergibt.

Es ist Aufgabe der vorliegenden Erfindung, einen Schmelzklebstoff mit gezielter sicherer Vernetzung verfügbar zu machen. Dadurch sollen bisher nicht dauerhafte verklebende Substrate oder Substratkombinationen mit dem neuen Klebstoffsystem verbunden werden. Eine sichere Vernetzung soll auch ohne Feuchtigkeit stattfinden. Dennoch ist eine gleichmäßige und definierbare Klebkraft zu erzeugen. Die Verklebung soll in einem großen Temperaturbereich haltbar sein. Schließlich soll der Klebstoff problemlos gelagert und transportiert werden und die Verarbeitung soll wesentlich vereinfacht werden.

Diese Aufgabe wird durch die Merkmale des Hauptanspruchs gelöst.

Die Erfindung betrifft einen Schmelzklebstoff aus thermoplastischen Polymeren oder Prepolymeren oder Kunstharzen oder einem Gemisch aus diesen Stoffen oder anderen Bestandteilen, von denen zumindest ein Bestandteil reaktive Gruppen aufweist, wie z.B. Isocyanatgruppen, Epoxidgruppen, nucleophile Gruppen, Hydroxylgruppen, Aminogruppen, Amidgruppen, Carboxylgruppen, Thiolgruppen, Doppelbindungen, Dreifachbindungen, Peroxidgruppen oder Azogruppen sowie gegebenenfalls mit Modifizierungsmittel wie Kunstharz, Füllstoff, Farbstoff und Weichmacher, der dadurch gekennzeichnet ist, daß der Schmelzklebstoff aus zumindest zwei Komponenten (A, B, C,...) besteht, von denen zumindest zwei Komponenten (A, B,...) derart reaktiv sind, daß eine mit zumindest einer anderen Komponente (A, B) reagiert und daß zumindest zwei miteinander reaktive Komponenten (A, B,...) bis zur gemeinsamen Schmelzverarbeitung getrennt sind und daß erst während der gemeinsamen Schmelzverarbeitung und unmittelbar vor dem Auftragen auf zu verklebende Substrate eine Reaktion der zwei Komponenten miteinander erfolgt und ein klebfähiges Gemisch aus allen beteiligten Komponenten entsteht.

Die Erfindung betrifft ebenfalls ein Verfahren zur Herstellung dieses Schmelzklebstoffs.

Die erfindungsgemäße Lösung besteht darin, daß der Schmelzklebstoff aus zumindest zwei in eine flüssige Phase schmelzbaren Komponenten besteht, von denen jede derart reaktiv ist, daß sie mit zumindest einer der anderen Komponenten chemisch reagiert. Jede Komponente wird bis zur gemeinsamen Schmelzverarbeitung von der anderen gesondert vorbereitet, transportiert, gelagert und bereitgehalten. Erst unmittelbar vor dem Auftragen, das heißt kurz vor oder beim Schmelzen, entsteht aus den Komponenten ein Gemisch. Wesentlich ist, daß dieser Klebstoff in zumindest zwei getrennten Komponenten zur Verarbeitung verfügbar ist, wobei die Aufteilung der Mischungsbestandteile derart erfolgt, daß verschiedene reaktive Gruppen, die miteinander reagieren, vor der Verarbeitung voneinander getrennt sind. Erst am Ort der Verarbeitung wird das Gemisch gebildet und unter Erwärmung nach der üblichen "Hotmelt"-Methode aufgetragen. Hierbei wird der Vorteil genutzt, daß sofort nach dem Erkalten physikalisch eine Anfangsfestigkeit der Klebstelle erzielbar ist, die ein sofortiges Weiterverarbeiten der verklebten Teile ermöglicht. Die Endfestigkeit der Klebstelle wird durch chemische Reaktion erreicht. Ein weiterer wesentlicher Vorteil ist, daß die chemische Vernetzungsreaktion aus den getrennt zusammengeführten Komponenten heraus erfolgt. Der Klebstoff ist nicht auf eine vorhandene Feuchtigkeit an der Klebstelle angewiesen. Dadurch können auch Substrate großflächig verklebt werden, die feuchtigkeitsundurchlässig sind, wie z.B. Metalle. Die Endfestigkeit entsteht an der Klebstelle als eine sichere chemische Reaktion, da die Komponenten für eine Vernetzung gezielt zusammengestellt sind. Während der Vernetzungsphase lassen sich aber die verklebten Teile bereits weiterverarbeiten, was den Fertigungsprozeß, in dem die Klebung verwendet wird, beschleunigt.

Bei der erfindungsgemäßen Kombination von beispielsweise NCO-Prepolymeren und Polymeren mit beispielsweise OH-Gruppen erhält man Gemische, die zur Vernetzung keine Feuchtigkeitszufuhr mehr benötigen. Man kann in vorteilhafter Weise mit solchen Kombinationen dampf- und gasdichte Materialien großflächig verkleben, ohne daß die Gefahr einer Untervernetzung wegen Feuchtigkeitsmangel in Kauf zu nehmen ist. In besonders vorteilhafter Weise lassen sich die einzelnen Komponenten wie folgt modifizieren:

Einer der Komponenten können Beschleuniger zugesetzt werden, wodurch die Vernetzungsgeschwindigkeit beeinflußt wird. Die Wahl der Komponente, der man den Beschleuniger zusetzt, kann dabei in vorteilhafter Weise so vorgenommen werden, daß die Lagerfähigkeit der Komponenten nicht beeinträchtigt wird. Adhäsionsverbessernde Zusätze, insbesondere Silane, zur Verbesserung der Keramik-, Glas- und Metallhaftung können beigemischt sein. Die Verwendung von Silanen war bisher wegen der starken Flüchtigkeit der Silane bei der Klebstoffherstellung im Schmelzkessel nicht möglich. Sie können nunmehr der Komponente zugesetzt werden, die bei der Herstellung der geringsten Temperaturbeanspruchung unterliegt.

Den Komponenten können weiterhin Füllstoffe und/oder Farbpigmente beigemengt werden. Die Verwendung solcher Füllstoffe und Farbpigmente war bei reaktiven Polyurethan-Schmelzklebstoffen gemäß dem Stand der Technik nur eingeschränkt möglich, da sie die Lagerfähigkeit dieses bekannten Hotmelts beeinträchtigten.

In einer der Komponenten können in besonders vorteilhafter Weise Graphit oder Ruß oder andere leitfähige Pigmente eingearbeitet werden, was zu einer leitfähigen Einstellung führt.

Gemäß dem erfindungsgemäßen Verfahren zur Herstellung des reaktiven Schmelzklebstoffes werden die Komponenten in entsprechenden Gebinden abgefüllt, bis zur Verarbeitung getrennt aufbewahrt und erst kurz vor ihrer Anwendung zusammen gemischt. Dazu kann in vorteilhafter Weise ein beheizbares Rührwerk dienen, dem über Faßschmelzanlagen mit Dosierpumpen die beiden Komponenten zugeführt werden.

In besonders vorteilhafter Weise kann zur Homogenisierung der Komponenten ein beheizbarer Mischextruder herangezogen werden. Da der Mischvorgang hier bei einer höheren Viskosität erfolgen kann, ist die Compoundierung mit einem Extruder auch bei höherviskosen Materialien möglich, die mit anderen Verfahren nicht verarbeitet werden können. Es kann durch Verwendung des Mischextruders auch bei wesentlich tieferen Mischtemperaturen und in wesentlich kürzerer Zeit homogenisiert werden, was bei temperaturempfindlichen Systemen weitaus schonender für den Klebstoff ist.

In weiterer vorteilhafter Ausgestaltung kann der Klebstoff nach dem Homogenisieren über einen Düsenkopf, der mit der Mischvorrichtung verbunden ist, direkt auf das zu verklebende Substrat aufgebracht werden.

Als besonders vorteilhaft des erfindungsgemäßen Verfahrens erweist sich die Kombination von hoher Anfangsfestigkeit mit gleichzeitig gesicherter, definierter Aushärtung des Schmelzklebstoffes, weitgehend unabhängig von Umgebungsbedingungen und den zu verklebenden Substraten. Weiterhin ist vorteilhaft die bessere Lagerbeständigkeit der einzelnen Komponenten, der verringerte Reinigungsaufwand bei der Produktion, das einfachere Handling bei der Produktion, Lagerung und Transport und insbesondere die breite Modifizierungsfähigkeit der Komponenten und somit der Klebstoffeigenschaften.

Bei Anwendung des Extruders zum Homogenisieren lassen sich auch höher molekulare Polymere verwenden. Gegenüber herkömmlichen Schmelzklebern sind bessere Kältefestigkeiten zu erwarten. Die Verarbeitungstemperatur kann im Vergleich zu den herkömmlichen Schmelzklebern niedrig gehalten werden.

Gegenüber den Einkomponenten, feuchtigkeitshärtenden Polyurethan-Schmelzklebern (gemäß DE-OS 32 36 313) lassen sich schwierigere Materialien, beispielsweise großflächige, dichte Materialen, verbinden oder, soweit beliebig dicke Klebefugen erforderlich sind, vernetzen diese über ihre Dicke vollständig durch.

Das folgende Beispiel erläutert die vorstehend allgemein beschriebene Erfindung anhand einer Ausführungsform mit zwei Komponenten A und B.

Als Komponente A dient ein kristallisierendes Polyurethan-Prepolymer mit 5 bis 6 Gewichtsprozent endständiger Isocyanatgruppen, hergestellt aus linearem Polyester (Hydroxylzahl 50) und 4,4 Diphenylmethandiisocyanat. Diese Komponente A (Handelsbezeichnung WI 8123) wird bis zur Verarbeitung in dicht schließenden Behältern verwahrt und transportiert.

Die Komponente B setzt sich im wesentlichen aus einem festen Epoxidharz auf Bisphenol A-Basis mit sekundären Hydroxylgruppen und einem Hydroxylwert von ca. 0,28 (=Äquivalente pro 100 g) (Handelsbezeichnung: "Eurepox 7003") zusammen. Am Einsatzort kann erforderlichenfalls die einfach zu lagernde und zu transportierende Komponente B im Extruder plastifiziert und entgast werden. Die Komponente B kann aber auch plastifiziert in geeigneten Behältern angeliefert werden.

Beide Komponenten A und B lassen sich in beliebigen Techniken erwärmen und mischen. Bevorzugt kann ein Extruder verwendet werden, in dessen erster Stufe die Plastifizierung der Komponente A erfolgt. Für die Mischzone des Extruders wird die Komponente B zugegeben, und in der Mischzone des Extruders werden beide Komponenten homogenisiert. Um das vorbestimmte Mischungsverhältnis der Komponenten zu gewährleisten, können die Materialzuführungen zum Extruder mit allgemein bekannten Dosiervorrichtungen ausgestattet sein. Das Mundstück des Extruders ist heizbar und mit einem Düsenkopf ausgerüstet, über das das Schmelzklebstoff-Gemisch unmittelbar auf die zu verarbeitenden Substrate aufgebracht wird. Es kann ein kontinuierlicher oder intermittierender Klebstoffauftrag erfolgen.

Bei langen Auftragspausen läßt sich der Düsenkopf mit einer der Komponenten A oder B, die für die Reinigung allein benutzt wird, reinigen und betriebsbereit halten.

Die Vorteile der Erfindung liegen in einer Vernetzung ohne Energiezufuhr. Die Vernetzung erfolgt ohne Feuchtigkeitsaufnahme aus der Umgebung oder anderen zufälligen Reaktionspartnern. Vielmehr läßt sich eine definierte und rasche Durchhärtung erzielen. Insbesondere im Vergleich zu reinen Reaktions-Zweikomponenten-Systemen wird eine hohe Anfangsfestigkeit geboten, wie der folgende Vergleich der Scherfestigkeit einer 2 x 2 cm² großen Holz/Holz-Verklebung bei 22° C zeigt. Die Scherfestigkeiten einer mit einem bekannten lösungsmittelfreien Zweikomponenten-Klebstoff auf Polyurethan-Basis mit einer Topfzeit von 2 min bei einem Mischungsverhältnis Binder (Handelsbezeichnung Irubbit RM 805/9) zu Härter (Handelsbezeichnung 79/21 S) von 100 : 90 beträgt:

| | |
|---|---|
| nach 5 min | < 1 N/4 cm² |
| nach 10 min | 1 N/4 cm² |
| nach 15 min | 12 N/4 cm² |
| nach 20 min | > 200 N/4 cm². |

Demgegenüber läßt sich mit dem oben beschriebenen ZweikomponentenSchmelzkleber, in einem Mischungsverhältnis Komponente A: 55 Teile zu Komponente B: 45 Teile, folgende überlegene Scherfestigkeit nach kurzer Zeit erreichen:

| | |
|---|---|
| nach 1 min | 115 N/4 cm² |
| nach 2 min | > 200 N/4 cm². |

Gegenüber dem gemäß DE-OS 32 36 313 bekannten Einkomponenten-Schmelzkleber, der auf Feuchtigkeit als zweite Komponente angewiesen ist, ergibt sich eine höhere Wärmefestigkeit, Nie folgender Vergleich der Scherfestigkeit einer 2 x 2 cm² großen Metall/Metall-Verklebung bei 100° C zeigt:

| | | |
|---|---|---|
| a) | Herkömmlicher gefüllter Schmelzkleber auf Ethylenvinylacetat-Basis (Handelsbezeichnung "Rakoll K 570"): | < 0,1 N/mm² |
| b) | Einkomponenten-Schmelzkleber gemäß DE-OS 32 36 313 : | < 0,3 N/mm² |
| c) | Zweikomponenten-Schmelzkleber gemäß vorliegendem Ausführungsbeispiel der Erfindung: | 2,8 N/mm². |

Ein zweites Beispiel betrifft ein System aus drei Komponenten zur Regulierung der Topfzeit, nämlich den Komponenten A1, A2 und B. Die Komponente A1 setzt sich zusammen aus einem Isocyanat, nämlich einem Prepolymer (Handelsbezeichnung WI 8123) zu 100 Teilen. Die Komponente A2 setzt sich zusammen aus einem Isocyanat, nämlich einem Prepolymer (Handelsbezeichnung WI 8123) zu 96,5 Teilen und einem Regler (Handelsbezeichnung ZL) zu 3,5 Teilen. Der Regler ist ein stark saurer Kationenaustauscher auf der Basis Polystyrol. Die Komponente B besteht aus einem hydroxylgruppenhaltigen Epoxydharz (Handelsbezeichnung Eurepox 7003) zu 100 Teilen. Mit dieser Mischung ist eine vorteilhafte Topfzeit eingestellt.

Eine Mischung aus 55 Teilen A1 mit 45 Teilen B ergibt eine Topfzeit von 1,5 Minuten.

Bei einer Mischung aus 55 Teilen A2 mit 45 Teilen B ergibt sich eine Topfzeit von 5 Minuten.

Das Gesamtmischungsverhältnis von A : B muß dabei stets 55 : 45 Teile bleiben. Die Komponente A kann sich dabei entweder aus A1 oder A2 oder einer Mischung aus diesen beiden Komponenten zusammensetzen.

Die Topfzeit variiert dann dabei zwischen 1,5 Minuten und 5 Minuten, je nach Zusammensetzung der Komponente A.

In der beigefügten Zeichnung ist schematisch ein Ausführungsbeispiel mit einem Zweikomponenten-Schmelzklebstoff dargestellt.

Es zeigen:
- Fig. 1: ein schematisches Ablaufschaubild des Verwendungsverfahrens nach dem Prinzip der Erfindung,
- Fig. 2a: ein schematisch vergrößerter Schnitt durch eine in Fig. 1 mit II bezeichnete Klebstelle nach der Erkaltung des Schmelzklebstoffes und
- Fig. 2b: eine ähnliche Darstellung nach der Vernetzung des Schmelzklebstoffes.

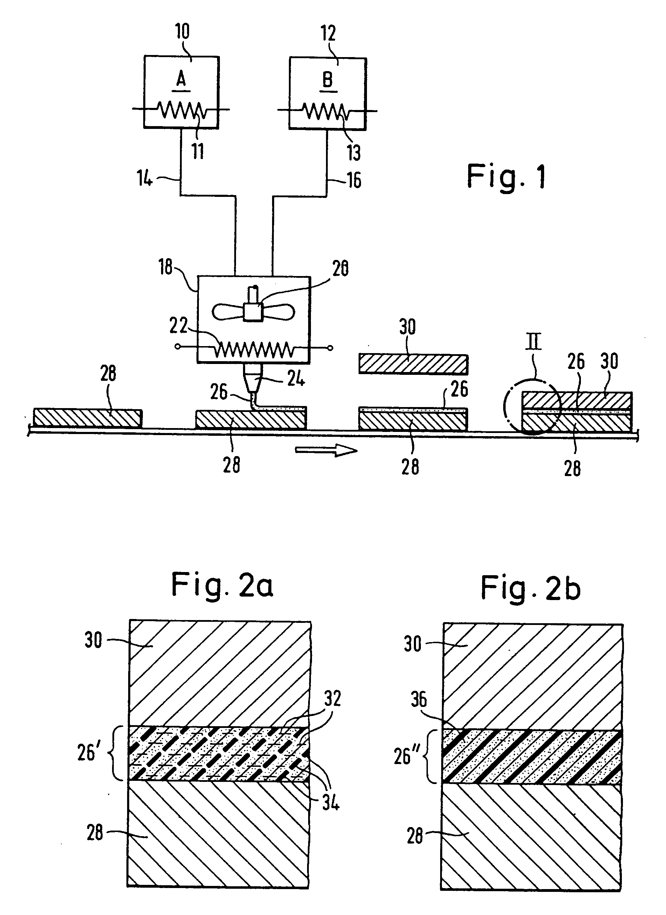

Wie aus Figur 1 hervorgeht, wird ein Schmelzklebstoff mit nur zwei chemisch reaktiven Komponenten A und B verarbeitet. Die Komponenten A und B werden bis zur Verarbeitung getrennt hergestellt, transportiert und bereitgestellt. Am Einsatzort wird die Komponente A im Behälter 10 und die Komponente B im Behälter 12 aufbereitet, gegebenenfalls durch Erwärmung. Hierfür ist im Behälter 10 eine Heizung 11 und im Behälter 12 eine Heizung 13 vorgesehen. Die gewünschte Dosierung erfolgt aus den Behältern 10 (für "A") und 12 (für "B") auf dem Weg einer Zuführung 14 für die Komponente A und einer Zuführung 16 für die Komponente B zu einem Mischgerät 18 mit einer Mischvorrichtung 20 und einer Heizung 22. Der in diesem Mischgerät 18 gemischte und auf Temperatur gehaltene Schmelzklebstoff wird flüssig mittels Düse 24 oder einer Reihe von Düsen 24 auf ein vorbeigeführtes Substrat aufgebracht. Das an der Verarbeitungsstelle aufbereitete warme, flüssige Schmelzklebstoffgemisch wird als gleichmäßiger Film oder Schicht 26 verteilt. Auf diese Schicht 26 wird das zweite Teil 30 so aufgebracht, daß die Substratfläche des Teils 30 benetzt wird. Beide Teile 28 und 30 werden in ihrer Lage zueinander fixiert.

In den Figuren 2a und 2b werden zwei zeitlich aufeinander folgende Zustände der Klebschicht 26 dargestellt. Die Figur 2a zeigt den Zustand der Klebschicht 26' nach der Abkühlung, wodurch physikalisch eine Anfangsfestigkeit entsteht, welche die Teile 28 und 30 in der gewünschten Verbindung zueinander hält. Die mechanische Fixierung der beiden Teile ist von diesem Zeitpunkt an nicht mehr notwendig. Die physikalische Bindung wird in Figur 2a durch die Symbole 32 in der Klebschicht 26' angedeutet. Die chemisch reaktiven Stoffe sind in diesem Zustand noch nicht vernetzt und in der Darstellung von Figur 2a durch noch unterbrochene Strichsymbole 34 angedeutet. In diesem schnell erreichbaren Zustand reicht die Anfangsbindung für eine Weiterverarbeitung der Teile 28 und 30 aus. Nur eine erneute Erwärmung könnte wieder zu einer Trennung der Teile 28 und 30 und so in die Anfangsphase führen.

Die Figur 2b stellt eine spätere Phase dar. Die reaktiven Teile der exakt dosierten und vermischten Komponenten A und B gehen nach einiger Zeit in eine irreversible chemische Vernetzung über. Dieser vernetzte Zustand 36 in der Klebschicht 26'' wird in Figur 2b als durchgezogene dicke Striche dargestellt. Selbst wenn die verbundenen Teile 28 und 30 nach der chemischen Vernetzung einer Erwärmung ausgesetzt werden, bleibt die Klebverbindung fest bestehen.

## Patentansprüche

1. Schmelzklebstoff aus thermoplastischem Polymeren oder Prepolymeren oder Kunstharzen oder einem Gemisch aus diesen Stoffen oder anderen Bestandteilen, von denen zumindest ein Bestandteil reaktive Gruppen aufweist, wie z. B. Isocyanatgruppen, Epoxidgruppen, nucleophile Gruppen, Hydroxylgruppen, Aminogruppen, Amidgruppen, Carboxylgruppen, Thiolgruppen, Doppelbindungen, Dreifachbindungen, Peroxidgruppen oder Azogruppen sowie gegebenenfalls mit Modifizierungsmittel wie Kunstharz, Füllstoff, Farbstoff und Weichmacher,
**dadurch gekennzeichnet,**
daß der Schmelzklebstoff aus zumindest zwei Komponenten (A, B, C,...) besteht, von denen zumindest zwei Komponenten (A, B,...) derart reaktiv sind, daß eine mit zumindest einer anderen Komponente (A, B) reagiert und daß zumindest zwei miteinander reaktive Komponenten (A, B,...) bis zur gemeinsamen Schmelzverarbeitung getrennt sind und daß erst während der gemeinsamen Schmelzverarbeitung und unmittelbar vor dem Auftragen auf zu verklebende Substrate eine Reaktion der zwei Komponenten miteinander erfolgt und ein klebfähiges Gemisch aus allen beteiligten Komponenten entsteht.

2. Schmelzklebstoff nach Anspruch 1,
**dadurch gekennzeichnet,**
daß es sich bei der in einer ersten Komponente (A) enthaltenen reaktiven Gruppe um Isocyanat (NCO) handelt.

3. Schmelzklebstoff nach Anspruch 1,
**dadurch gekennzeichnet,**
daß es sich bei der in einer ersten Komponente (A) enthaltenen reaktiven Gruppe um Epoxi-Gruppen handelt.

4. Schmelzklebstoff nach Anspruch 1 und/oder 2 oder Anspruch 1 und/oder 3,
**dadurch gekennzeichnet,**
daß eine mit der ersten Komponente (A) reagierende zweite Komponente (B) nucleophile Verbindungen mit einem aciden H-Atom enthält.

5. Schmelzklebstoff nach Anspruch 2 und 4,
**dadurch gekennzeichnet,**
daß es sich bei den in der zweiten Komponente (B) enthaltenen reaktiven Gruppen um primäre, sekundäre oder tertiäre Hydroxylgruppen handelt.

6. Schmelzklebstoff nach Anspruch 4,
**dadurch gekennzeichnet,**
daß es sich bei den in der zweiten Komponente (B) enthaltenen reaktiven Gruppen um primäre oder sekundäre Aminogruppen handelt.

7. Schmelzklebstoff nach Anspruch 4,
**dadurch gekennzeichnet,**
daß es sich bei den in der zweiten Komponente (B) enthaltenen reaktiven Gruppen um Amid-Gruppen handelt.

8. Schmelzklebstoff nach Anspruch 4,
**dadurch gekennzeichnet,**
daß es sich bei den in der zweiten Komponente (B) enthaltenen reaktiven Gruppen um Carboxyl-Gruppen handelt.

9. Schmelzklebstoff nach Anspruch 4,
**dadurch gekennzeichnet,**
daß es sich bei den in der zweiten Komponente (B) enthaltenen reaktiven Gruppen um Thiole handelt.

10. Schmelzklebstoff nach Anspruch 1,
**dadurch gekennzeichnet,**
daß es sich bei den in der ersten Komponente (A) enthaltenen reaktiven Gruppen um einfach oder mehrfach ungesättigte Doppel- oder Dreifachbindungen handelt.

11. Schmelzklebstoff nach Anspruch 10,
**dadurch gekennzeichnet,**
daß es sich bei den in der zweiten Komponente (B) enthaltenen Gruppen um primäre oder sekundäre Amino-Gruppen handelt.

12. Schmelzklebstoff nach Anspruch 10,
**dadurch gekennzeichnet,**
daß die zweite Komponente (B) Verbindungen enthält, die eine radikalische Polymerisation ermöglichen, wie z.B. Peroxide oder Azo-Verbindungen.

13. Schmelzklebstoff nach einem oder mehreren der vorausgehenden Ansprüche,
**dadurch gekennzeichnet,**
daß adhäsionsverbessernde Zusätze zugesetzt sind.

14. Schmelzklebstoff nach Anspruch 13,
**dadurch gekennzeichnet,**
daß als adhäsionsverbessernde Zusätze Silane zugesetzt sind.

15. Schmelzklebstoff nach einem oder mehreren der vorausgehenden Ansprüche,
**dadurch gekennzeichnet,**
daß in einer der Komponenten Malein- oder Fumarsäure eingearbeitet ist.

16. Schmelzklebstoff nach einem oder mehreren der vorausgehenden Ansprüche,
**dadurch gekennzeichnet,**
daß in eine der Komponenten Maleinsäureanhydrid eingearbeitet ist.

17. Verfahren zum Verkleben von Teilen mittels eines Schmelzklebstoffes gemäß einem oder mehreren der Ansprüche 1 bis 16,
**dadurch gekennzeichnet,**
daß der Klebstoff in zumindest zwei Komponenten (A, B, C, ...), von denen mindestens zwei miteinander reaktiv sind, getrennt bereitgestellt wird und daß die Komponenten (A, B, C ...) erst kurz vor der Aufbringung auf die Substratfläche der zu verklebenden Teile aus zumindest zwei Bestandteilen des Klebstoffes erwärmt und vermischt werden.

18. Verfahren nach Anspruch 17,
**dadurch gekennzeichnet,**
daß verschiedene, in flüssiger Phase vorliegende Komponenten (A, B, C, ...) einzeln und aufeinander abgestimmt gezielt dosiert, einer beheizten Mischkammer zugeführt und darin mit einem Rührer homogen vermischt werden.

19. Verfahren nach Anspruch 17,
**dadurch gekennzeichnet,**
daß die verschiedenen Komponenten (A, B, C, ...) in einem beheizbaren Mischextruder aufeinander abgestimmt dosiert, zusammengeführt und homogenisiert werden.

20. Verfahren nach Anspruch 17,
**dadurch gekennzeichnet,**
daß die verschiedenen, in flüssiger Phase vorliegenden Komponenten (A, B, C, ...) aufeinander abgestimmt dosiert, einem beheizten, statischen Mischer zugeführt und darin homogenisiert werden.

21. Verfahren nach einem der Ansprüche 18 bis 20,
**dadurch gekennzeichnet,**
daß der Klebstoff über einen Düsenkopf aufgetragen wird, der mit einer Mischvorrichtung verbunden ist.

22. Verfahren nach einem oder mehreren der vorausgehenden Ansprüche,
**dadurch gekennzeichnet,**
daß bei Arbeitsunterbrechungen, die länger als die Topfzeit des Gemisches aus reaktiven Schmelzkleber-Komponenten (A, B, ...) sind, die Reinigung der Mischvorrichtung durch Spülen mit der Schmelze einer einzelnen Komponente (A oder B, ...) erfolgt.

23. Verfahren nach einem oder mehreren der vorausgehenden Ansprüche,
**dadurch gekennzeichnet,**
daß bei Arbeitsunterbrechungen, die länger als die Topfzeit des Gemisches aus reaktiven Schmelzkleber-Komponenten (A, B, ...) sind, die Reinigung der Mischvorrichtung durch Spülen mit einer zusätzlichen inerten Schmelze oder Flüssigkeit erfolgt, die nicht mit den reaktiven Komponenten (A, B) des Schmelzklebstoffes reagieren kann.

## Claims

1. A hot-melt-type adhesive made from thermoplastic polymers or prepolymers or artificial resin or a mixture of these substances or other constituents of which at least one constituent comprises reactive groups such as isocyanate groups, epoxide groups, nucleophilic groups, hydroxyl groups, amino groups, amide groups, carboxyl groups, thiol groups, double bonds, triple bonds, peroxide groups or azo groups as well as if necessary having modifying agents such as artificial resin, filling materials, dyestuffs, and softeners, characterised in that the hot-melt-type adhesive comprises at least two components (A, B, C,....) of which two at least components (A, B,....) are reactive in such a way that one component reacts with at least one other component (A, B) and that at least two components (A, B,....) which react with each other are separate until their joint hot-melt treatment and that the two components only react with each other during the joint hot-melt-type treatment directly prior to being applied to the adhesive substrate and an adhesive mixture is produced from all the components involved.

2. A hot-melt-type adhesive according to claim 1, characterised in that the reactive group contained in a first component (A) is isocyanate (NCO).

3. A hot-melt-type adhesive according to claim 1, characterised in that the reactive group contained in a first component (A) is epoxy groups.

4. A hot-melt-type adhesive according to claim 1 and/or 2 or claim 1 and/or 3, characterised in that a second component (B) which reacts with the first component (A) comprises nucleophilic compounds having an acidic H-atom.

5. A hot-melt-type adhesive according to claim 2 and 4, characterised in that the reactive groups contained in the second component (B) are primary, secondary or tertiary hydroxyl groups.

6. A hot-melt-type adhesive according to claim 4, characterised in that the reactive groups contained in the second component (B) are primary or secondary amino groups.

7. A hot-melt-type adhesive according to claim 4, characterised in that the reactive groups contained in the second component (B) are amide groups.

8. A hot-melt-type adhesive according to claim 4, characterised in that the reactive groups contained in the second component (B) are carboxyl groups.

9. A hot-melt-type adhesive according to claim 4, characterised in that the reactive groups contained in the second component (B) are thiol.

10. A hot-melt-type adhesive according to claim 1, characterised in that the reactive groups contained in the first component (A) are single or multiple unsaturated double or triple bonds.

11. A hot-melt-type adhesive according to claim 10, characterised in that the groups contained in the second component (B) are primary or secondary amino groups.

12. A hot-melt-type adhesive according to claim 10, characterised in that the second component (B) contains compounds, which facilitate a radical polymerisation, such as peroxide or azo compounds.

13. A hot-melt-type adhesive according to one or several of the preceding claims, characterised in that adhesion-improving additives are added.

14. A hot-melt-type adhesive according to claim 13, characterised in that the silanes are added as the adhesion-improving additives.

15. A hot-melt-type adhesive according to one or several of the preceding claims, characterised in that maleic acid or fumaric acid is incorporated in one of the components.

16. A hot-melt-type adhesive according to one or several of the preceding claims, characterised in that maleic acid anhydride is incorporated in one of the components.

17. A method for adhering parts by means of a hot-melt-type adhesive according to one or several of claims 1 to 16, characterised in that the adhesive comprising at least two components (A, B, C,....), of which at least two react with each other, is prepared separately and that the components (A, B, C,....) are only heated and mixed immediately prior to being applied to the substrate surface of the parts to be adhered comprising at least two constituents of adhesive.

18. A method according to claim 17, characterised in that various components (A, B, C,....) which are in the liquid phase and which components are purposefully metered individually and corresponding to each other, are added to a heated mixing chamber and are mixed therein by means of an agitator.

19. A method according to claim 17, characterised in that the various components (A, B, C,....) are metered corresponding to each other, added together and homogenised in a heated mixing extruder.

20. A method according to claim 17, characterised in that the various components (A, B, C,....) which are in the liquid phase are metered correspondingly to each other, are added to a heated static mixer and are homogenised therein.

21. A method according to one of claims 18 to 20, characterised in that the adhesive is applied by way of a nozzle which is connected to a mixing device.

22. A method according to one or several of the preceding claims, characterised in that when the work is interrupted for periods of time which are longer than the pot time of the mixture comprising reactive hot-melt-type adhesive components (A, B,....), the mixing device is cleaned by virtue of flushing with the melt of one of the individual components (A or B,....).

23. A method according to one or several of the preceding claims, characterised in that when the work is interrupted for periods of time which are longer than the pot time of the mixture comprising reactive hot-melt-type components (A, B,....), the mixing device is cleaned by virtue of flushing with an additional inert melt or liquid, which is not able to react with the reactive components (A, B,) of the hot-melt-type adhesive.

## Revendications

1. Colle fusible en polymères, en pré-polymères ou en résines synthétiques thermoplastiques ou composée d'un mélange de ces matières ou d'autres composants, parmi lesquels au moins un composant comporte des groupes réactifs tels que des groupes isocyanates, des groupes époxydes, des groupes nucléophiles, des groupes hydroxyles, des groupes amino, des groupes amides, des groupes carboxyles, des groupes thiols, des doubles liaisons, des triples liaisons, des groupes peroxydes ou des groupes azoïques par exemple, ainsi que, le cas échéant avec des agents modifiants tels que de la résine synthétique, une matière de remplissage, un colorant et un émollient, caractérisée en ce que la colle fusible est constituée d'au moins deux composants (A, B, C, ...), dont au moins deux composants (A, B, ...) sont réactifs de telle manière qu'un composant au moins réagit avec l'autre (A, B), en ce qu'au moins deux composants réactifs entre eux (A, B, ...) sont séparés jusqu'à la transformation de fusion commune, en ce qu'une réaction entre les deux composants n'intervient que pendant la transformation de fusion commune et juste avant l'application sur des substrats à coller, et en ce qu'un mélange collant est obtenu à partir de tous les composants associés.

2. Colle fusible selon la revendication 1, caractérisée en ce que, concernant le groupe réactif contenu dans un premier composant (A), il s'agit d'isocyanate (NCO).

3. Colle fusible selon la revendication 1, caractérisée en ce que, concernant le groupe réactif contenu dans un premier composant (A), il s'agit de groupes époxydes.

4. Colle fusible selon la revendication 1 et/ou 2 ou la revendication 1 et/ou 3, caractérisée en ce qu'un deuxième composant (B) réagissant avec le premier composant (A) contient des liaisons nucléophiles avec un atome H acide

5. Colle fusible selon les revendications 2 et 4, caractérisée en ce que, concernant les groupes réactifs contenus dans le deuxième composant (B), il s'agit de groupes hydroxyles primaires, secondaires ou tertiaires.

6. Colle fusible selon la revendication 4, caractérisée en ce que, concernant les groupes réactifs contenus dans le deuxième composant (B), il s'agit de groupes amino primaires ou secondaires.

7. Colle fusible selon la revendication 4, caractérisée en ce que, concernant les groupes réactifs contenus dans le deuxième composant (B), il s'agit de groupes amides.

8. Colle fusible selon la revendication 4, caractérisée en ce que, concernant les groupes réactifs contenus dans le deuxième composant (B), il s'agit de groupes carboxyles.

9. Colle fusible selon la revendication 4, caractérisée en ce que, concernant les groupes réactifs contenus dans le deuxième composant (B), il s'agit de thiols.

10. Colle fusible selon la revendication 1, caractérisée en ce que, concernant les groupes réactifs contenus dans le premier composant (A), il s'agit de doubles liaisons ou de triples liaisons insaturées simples ou multiples.

11. Colle fusible selon la revendication 10, caractérisée en ce que, concernant les groupes réactifs contenus dans le deuxième composant (B), il s'agit de groupes amino primaires ou secondaires.

12. Colle fusible selon la revendication 10, caractérisée en ce que le deuxième composant (B) contient des liaisons permettant une polymérisation radicalaire, tels que des peroxydes ou des liaisons azoïques par exemple.

13. Colle fusible selon l'une ou plusieurs des revendications précédentes, caractérisée en ce qu'il est ajouté des additifs améliorant l'adhésion.

14. Colle fusible selon la revendication 13, caractérisée en ce que, en tant qu'additifs améliorant l'adhésion, il est ajouté des silanes.

15. Colle fusible selon l'une ou plusieurs des revendications précédentes, caractérisée en ce que de l'acide maléique ou de l'acide fumarique est incorporé dans l'un des composants.

16. Colle fusible selon l'une ou plusieurs des revendications précédentes, caractérisée en ce que de l'anhydride maléique est incorporé dans l'un des composants.

17. Procédé pour le collage de pièces à l'aide d'une colle fusible selon l'une ou plusieurs des revendications 1 à 16, caractérisé en ce que la colle fusible est mise à disposition en au moins deux composants (A, B, C, ...) dont au moins deux sont réactifs entre eux, et en ce que les composants (A, B, C ...) d'au moins deux constituants de la colle ne sont chauffés et mélangés que juste avant l'application sur la surface du substrat des pièces à coller.

18. Procédé selon la revendication 17, caractérisé en ce que différents composants (A, B, C, ...) présents en phase liquide, coordonnés individuellement et les uns par rapport aux autres et dosés de manière appropriée, sont amenés vers une chambre de mélange chauffée et mélangés de façon homogène dans cette dernière avec un agitateur.

19. Procédé selon la revendication 17, caractérisé en ce que les différents composants (A, B, C, ...), coordonnés les uns par rapport aux autres et dosés, sont regroupés et homogénéisés dans une extrudeuse mélangeuse chauffante.

20. Procédé selon la revendication 17, caractérisé en ce que les différents composants (A, B, C, ...) présents en phase liquide, coordonnés les uns par rapport aux autres et dosés, sont amenés vers un mélangeur statique chauffé et homogénéisés dans ce dernier.

21. Procédé selon l'une des revendications 18 à 20, caractérisé en ce que la colle est appliquée au moyen d'une tête d'injection reliée à un dispositif de mélange.

22. Procédé selon l'une ou plusieurs des revendications précédentes, caractérisé en ce que, lors d'interruptions de travail dont la durée est supérieure à la vie en pot du mélange constitué de composants réactifs (A, B, ...) de la colle fusible, le nettoyage du dispositif de mélange est effectué par un rinçage avec la masse fondue d'un seul composant (A ou B, ...).

23. Procédé selon l'une ou plusieurs des revendications précédentes, caractérisé en ce que, lors d'interruptions de travail dont la durée est supérieure à la vie en pot du mélange constitué de composants réactifs (A, B, ...) de la colle fusible, le nettoyage du dispositif de mélange est effectué par un rinçage avec une masse fondue ou un liquide inerte supplémentaire, qui ne peut pas réagir avec les composants réactifs (A, B) de la colle fusible.
